# EUROPÄISCHE PATENTSCHRIFT

(11) **EP 1 539 542 B1**
(45) Veröffentlichungstag und Bekanntmachung des Hinweises auf die Patenterteilung: **02.08.2006**
(21) Anmeldenummer: 04706176.7
(22) Anmeldetag: 29.01.2004
(51) Int. Cl.: B60R 21/01

(54) **STEUERANORDNUNG UND VERFAHREN ZUR FUNKTIONSÜBERPRÜFUNG EINER DERARTIGEN STEUERANORDNUNG FÜR INSASSENSCHUTZMITTEL IN EINEM KRAFTFAHRZEUG**
CONTROL ARRANGEMENT AND METHOD FOR TESTING THE OPERATION OF A CONTROL ARRANGEMENT OF THIS TYPE FOR OCCUPANT PROTECTION MEANS IN A MOTOR VEHICLE
DISPOSITIF DE COMMANDE ET PROCEDE DE CONTROLE DU FONCTIONNEMENT D'UN TEL DISPOSITIF DE COMMANDE DESTINE A LA PROTECTION DES OCCUPANTS D'UN VEHICULE

(30) Priorität: 28.02.2003 DE 10308881
(43) Veröffentlichungstag der Anmeldung: 15.06.2005
(73) Patentinhaber: SIEMENS AKTIENGESELLSCHAFT, 80333 München (DE)
(72) Erfinder: HERMANN, Stefan, 93096 Köfering (DE); MADER, Gerhard, 93107 Thalmassing (DE); SCHMIDT, Claus, 93053 Regensburg (DE)
(86) Internationale Anmeldenummer: PCT/EP2004/000809
(87) Internationale Veröffentlichungsnummer: WO 2004/076242

(56) Entgegenhaltungen:
- WO-A-00/41917
- US-A- 6 023 664

## Beschreibung

Die Erfindung betrifft eine Steueranordnung sowie ein Verfahren zur Funktionsüberprüfung einer derartigen Steueranordnung für Insassenschutzmittel in einem Kraftfahrzeug.

Insassenschutzmittel wie Airbags, Gurtstraffer, oder dergleichen stellen eine wichtige Sicherheitskomponente heutiger Kraftfahrzeuge dar. Sie sind zwar nicht gesetzlich vorgeschrieben, jedoch besitzt fast jedes Auto, das gegenwärtig irgendwo auf der Welt produziert wird, mindestens einen Front-Airbag für den Fahrer.

Viele Automobile verfügen neben dem Front-Airbag mittlerweile bereits über weitere verschiedene Airbags, insb. Seitenairbags, Kopf-Airbags, Knie-Airbags oder dergleichen für Fahrer, Beifahrer oder andere Insassen. Ein jedes dieser Airbag-Systeme nutzt mehrere Sensoren, die an verschiedenen Stellen der Fahrzeugkarosserie angeordnet sind und welche die bei einem Aufprall auftretende Verzögerung (negative Beschleunigung) erkennen. Die üblicherweise verwendeten Systeme mit Fahrer-, Beifahrer-und Seiten-Airbags arbeiten mit in oder benachbart einer Steueranordnung angeordneten Beschleunigungssensoren. Die Steueranordnung befindet sich an zentraler Stelle im Kraftfahrzeug, beispielsweise unter dem Fahrersitz oder im Fahrzeugtunnel. Sie wird deshalb häufig auch als Zentralmodul bezeichnet. Zur Erkennung eines Seiten-Aufpralls sind an beiden Seiten des Fahrzeugs jeweils wenigstens ein Beschleunigungssensor - oder fortschrittlicher wenigstens ein Drucksensor - vorgesehen, welche wegen ihrer dezentralen Anordnung häufig auch als sog. Satelliten bezeichnet werden. An den jeweiligen Sensor werden generell verhältnismäßig hohe Anforderungen gestellt, denn er ist die erste Komponente eines Insassenschutzsystems, bei der die Crash-Information eintrifft. Er muss die schnelle Verzögerung des Kraftfahrzeugs in ein zuverlässiges und genaues elektrisches Signal (a) umsetzen.

Zu den gebräuchlichsten Verfahren der Beschleunigungsmessung zählt die Messung der Wirkung einer Kraft F, die sich aus der auf eine seismische Masse m einwirkenden Beschleunigung g ergibt. Diese Kraft erzeugt mechanische Spannungen und eine Lageänderung der seismischen Masse. Die Spannungen können anhand der piezoresistiven (oder piezoelektrischen) Eigenschaften des verwendeten Materials bestimmt werden. Lageänderungen werden gewöhnlich unter Verwendung einer variablen Kapazität gemessen. Der piezoresistive Effekt in Halbleitern wird in großem Maße in Drucksensoren genutzt, während für Beschleunigungssensoren das kapazitive Messprinzip in einer Vielzahl technischer Anwendungen bevorzugt wird. Mit diesem Design lassen sich durch Oberflächen-Mikrofertigung sehr kleine Sensorstrukturen und damit kostengünstige Lösungen realisieren. Die kapazitiv aufgebauten Sensoren sind auch weniger anfällig für Temperaturschwankungen und bieten einen großen Betriebstemperaturbereich. Deshalb basieren auf dem Gebiet der Insassenschutzsysteme neben den Beschleunigungssensoren auch die zum Einsatz kommenden Drucksensoren überwiegend auf diesem Prinzip.

Das eigentliche Sensorelement, die sogenannte "G-Zelle" (Gcell), ist insbesondere eine aus Halbleitermaterialien aufgebaute mechanische Konstruktion. Sie besteht beispielsweise aus zwei fest angeordneten Plättchen mit einem dazwischen liegenden beweglichen Plättchen, das die seismische Masse darstellt. Wird die G-Zelle einer Beschleunigung ausgesetzt, bewegt sich das mittlere Plättchen aus seiner Ruheposition heraus. Wenn sich das mittlere Plättchen verlagert, erhöht sich sein Abstand zu einem der festen Plättchen im gleichen Maße, wie sich der Abstand zum anderen verringert. Die Änderung des Abstandes ist ein Maß für die Beschleunigung. Die zur Aufhängung des mittleren Plättchens benutzten Träger wirken als Federn; ein ggf. zwischen den Plättchen komprimiertes Fluid, beispielsweise ein spezielles Gas oder auch nur Luft, dämpft die Bewegung. Sofern dies unerwünscht ist, ist bekannt, ein Vakuum vorzusehen. Eine G-Zelle sensiert in der Regel entlang einer Empfindlichkeitsachse. Durch geschickten Aufbau kann eine Masse aber auch für zwei Achsen verwendet werden, was die Kosten reduziert. Man spricht dann von sog. x-y-Gcells bzw. X-Y-Sensoren. In elektrischer Hinsicht bilden die Plättchen der G-Zelle ein gekoppeltes Kondensator-Paar. Wenn sich das mittlere Plättchen infolge der Beschleunigung entlang der Empfindlichkeitsachse bewegt, ändert sich der Abstand zwischen den Plättchen, wodurch sich auch die Kapazität jedes der beiden Kondensatoren ändert. Analoges gilt auch für G-Zellen mit z.B. mehreren fingerförmig ineinandergreifenden Elementen.

Die durch Mikrofertigung hergestellten G-Zellen haben sehr kleine Abmessungen. Die seismische Masse wiegt mitunter nur wenige hundert Pikogramm (1 Pikogramm = 10⁻¹² Gramm). Bei Beaufschlagung mit einer Beschleunigung von 100 g verändert das bewegliche Plättchen bzw. der Finger seine Lage um weniger als 400 nm (Nanometer). Um eine Messauflösung von 1 g zu erzielen, muss eine Kapazitätsänderung ΔC von weniger als 1 Femtofarad (10⁻¹⁵ F) erkannt werden. Um eine so kleine Kapazität messen zu können, ist im Beschleunigungssensor eine dezidierte Steuerschaltung erforderlich, welche die Kapazität in ein verwertbares Ausgangssignal (a) umsetzt.

Das Ausgangssignal (a) des Sensors wird einer Auswerteeinheit, welche wenigstens einen, heutzutage zumeist gleich mehrere Mikrocontroller umfasst, zugeführt, von denen einer anschließend einen Crash-Unterscheidungsalgorithmus ausführt, um zwischen einem tatsächlichen Aufprall und dem normalen dynamischen Fahrzeugverhalten zu differenzieren und ggf. ein Auslösesignal für das Rückhaltemittel erzeugt.

Das Auslösesignal wird gegenwärtig häufig nur in Abhängigkeit eines sog. Schaltsignals erzeugt, welches im einfachsten Fall beispielsweise von einem mechanischen Beschleunigungsschalter kommen kann. In einer Vielzahl von Beschleunigungssensoranordnungen übernimmt heutzutage jedoch einer der Beschleunigungssensoren selbst diese Aufgabe. Derartige sogenannte Safing-Sensoren sorgen nach Ausführung des sog. Saving - Algorithmus, für den heutzutage regelmäßig ein eigener Mikrocontroller in der Auswerteeinheit vorgesehen ist, für eine Freigabe oder andernfalls für eine Verhinderung der Auslösung des Rückhaltemittels, wenn der Beschleunigungssensor oder die Auswerteeinrichtung, d.h. die in den Mikrocontrollern ausgeführten Algorithmen, fehlerhaft arbeiten und demzufolge ein fehlerhaftes Auslösesignal liefern würden.

Aus der EP 1 149 004, die die Merkmale des Oberbegriffs der Ansprüche 1 und 7 offenbart, ist ein Verfahren sowie eine Vorrichtung zur Funktionsüberprüfung einer Steueranordnung für Insassenschutzmittel in einem Kraftfahrzeug bekannt, bei dem aus den Ausgangssignalen der Beschleunigungssensoren eine gewichtete Summe zur Überprüfung der Plausibilität der Signale gebildet wird, indem wenigstens das Ausgangssignal eines Beschleunigungssensors mit einem Korrekturwert multipliziert wird. Eine derartige Funktionsüberprüfung erlaubt zwar in vorteilhafter Weise Aussagen über die Funktionstüchtigkeit der Beschleunigungssensoren, deren Signalleistungen, Pegel, oder dergleichen. Eine Aussage darüber, inwieweit der Safing-Algorithmus selbst zuverlässig arbeitet, ist indes nicht möglich, weil auf diesen während des Testmodus nicht zurückgegriffen wird.

Aufgabe der Erfindung ist es, ein verbessertes Verfahren zur Funktionsüberprüfung eines Systems von mehreren Beschleunigungssensoren einer Steueranordnung für Insassenschutzmittel in einem Kraftfahrzeug zu liefern. Insbesondere soll neben den Sensoren die Funktionstüchtigkeit des Safing-Algorithmus selbst prüfbar sein.

Diese Aufgabe wird erfindungsgemäß durch eine Schaltungsanordnung mit den Merkmalen gemäß Patentanspruch 1 sowie durch ein Verfahren zur Funktionsüberprüfung mit den Merkmalen gemäß Patentanspruch 7 gelöst.

Der vorliegenden Erfindung liegt der Gedanke zugrunde, nicht erst das Ausgangssignal (a) eines Beschleunigungssensors im Hinblick auf eine gewichtete Summe (Σ_{g}) mit einem Korrekturwert (k_{w}) zu multiplizieren, sondern mittels eine Wichtungsmittels ein Testsignal (t) derartig abzuändern, dass ein bereits gewichtetes Ausgangssignal (a_{g}) erzeugbar ist, so dass während eines Test-Betriebs unmittelbar auf den Safing - Algorithmus einer Auswerteeinrichtung rückgegriffen werden kann, wodurch dieser in vorteilhafter Weise selbst im Hinblick auf seine Funktionstüchtigkeit überprüfbar ist.

Vorteilhafte Aus- und Weiterbildungen, welche einzeln oder in Kombination miteinander einsetzbar sind, sind in den abhängigen Ansprüchen angegeben.

Weitere Vorteile der Erfindung und deren Weiterbildungen werden im Folgenden anhand von Ausführungsbeispielen und der Zeichnung näher erläutert.

Darin zeigen schematisch:
- Fig. 1: den typischen Aufbau eines Insassenschutz-Systems in einem Kraftfahrzeug;
- Fig. 2: einen Beschleunigungssensor umfassend eine seismische Masse, welche entlang einer Empfindlichkeitsachse auslenkbar ist;
- Fig. 3: einen Beschleunigungssensor umfassend eine seismische Masse, welche entlang zweier Empfindlichkeitsachsen auslenkbar ist;
- Fig. 4: den Beschleunigungssensor nach Fig. 2 in Wirkverbindung mit einem Wichtungsmittel;
- Fig. 5: eine Anordnung mit einem X-Y-Beschleunigungssensor und einem weiteren Beschleunigungssensor;
- Fig. 6: eine alternative Sensorausrichtung der Anordnung gemäß Fig. 5; und
- Fig. 7: eine sternförmige Anordnung von drei Beschleunigungssensoren.

Gleiche Elemente bzw. Signale sind figurenübergreifend durch gleiche Bezugszeichen gekennzeichnet.

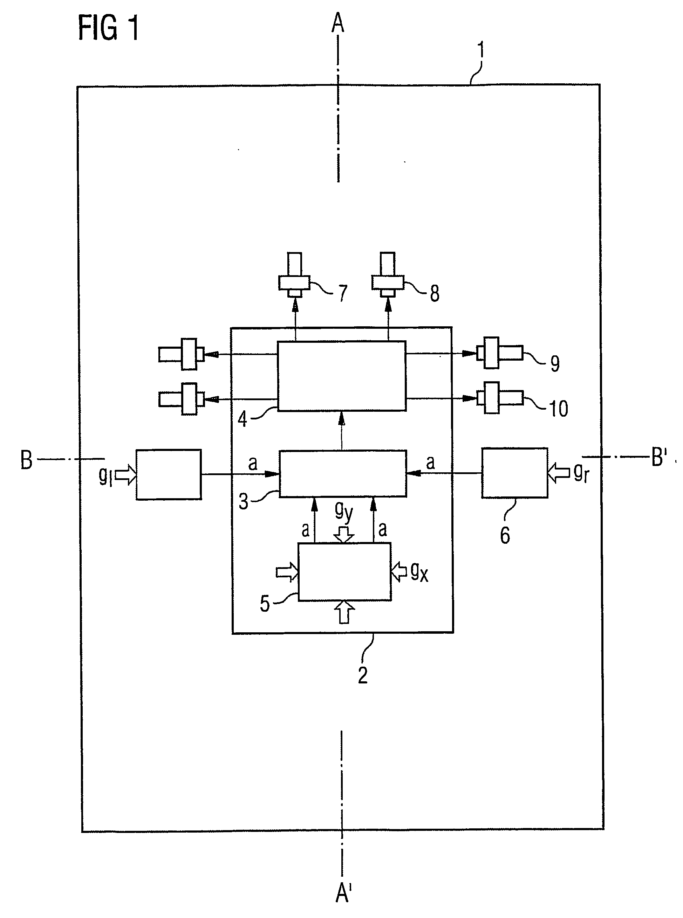

Fig. 1 zeigt den typischen Aufbau eines Insassenschutz-Systems in einem Kraftfahrzeug 1. An einer möglichst zentralen Stelle im Kraftfahrzeug 1 befindet sich eine Steueranordnung 2. Diese umfasst eine Auswerteeinheit 3 beispielsweise in Gestalt wenigstens eines Mikrocontrollers. In der Steueranordnung 2 oder benachbart zu dieser befindet sich ein Sensorfeld 5, in welchem geeignete Sensoren 17,18,19,20 zur Messung von Beschleunigungen, z.B. einer Beschleunigung gₓ entlang einer Empfindlichkeitsachse in x-Richtung bzw. g_{y} entlang einer Empfindlichkeitsachse in y-Richtung, angeordnet sind. Die Empfindlichkeitsachsen u,v,w,x,y der Sensoren 17,18,19,20 spannen eine Ebene auf, welche nach Einbau der Steueranordnung 2 in einem Kraftfahrzeug 1 im Wesentlichen parallel ist zu einer durch die Fahrzeuglängsachse A-A' und die Fahrzeugquerachse B-B' festgelegten Ebene. Weitere Sensoren 6, insb. zur Erkennung eines Seitenaufpralls, sind zur vorzugsweise kapazitiven Messung von seitlichen Beschleunigungen, z.B. einer Beschleunigung gᵣ von rechts bzw. gₗ von links, an dezentraler Stelle seitlich im Kraftfahrzeug 1 angeordnet. Als Sensoren 6 für den seitlichen Einbau finden typischerweise Beschleunigungssensoren, in jüngerer Zeit zunehmend aber auch Drucksensoren, Verwendung. Die jeweiligen Ausgangssignale a der Sensoren werden von den in der Auswerteeinheit 3 angeordneten Mikrocontrollern abgefragt, von denen einer anschließend einen Crash-Unterscheidungsalgorithmus ausführt, um zwischen einem tatsächlichen Aufprall und dem normalen dynamischen Fahrzeugverhalten zu differenzieren. Ein vorzugsweise von der Crashverarbeitung unabhängiger Mikrocontroller der Auswerteeinheit 3 führt mittels einer Safing-Routine auch eine kontinuierliche und/oder zyklische Diagnose des Systems durch, um sicherzustellen, dass es ordnungsgemäß arbeitet und im Falle eines Unfalls zur Verfügung steht. Die im zentralen Sensorfeld 5 angeordneten Sensoren 17,18,19,20 müssen ebenso wie die seitlich 6 angeordneten äußerst zuverlässig sein, damit sie dem Mikrocontroller 3 keine falschen Signale a schicken, was zu einer unerwünschten Aktivierung der Rückhaltemittel führen könnte. Jede Störung wird daher dem Fahrer z.B. durch eine Airbag-Warnlampe auf der Instrumententafel (nicht dargestellt) mitgeteilt, und die Rückhalte-Funktion wird blockiert, bis der Fehler behoben ist. Wenn die Airbags bei einem Aufprall entfaltet werden müssen, aktiviert die Auswerteeinheit 3 einen Zündstromschalter 4, so dass Strom durch die Zündkreise des Zünders für den Fahrer-Front-Airbag 7, des Zünders für den Beifahrer-Front-Airbag 8, des Zünders für den Seiten-Airbag 9, des Zünders für den Gurtstraffer 10, oder dergleichen mehr fließt, womit die Gurtstraffer aktiviert und die Gaserzeugungsreaktion innerhalb der Aufblasmodule ausgelöst sind.

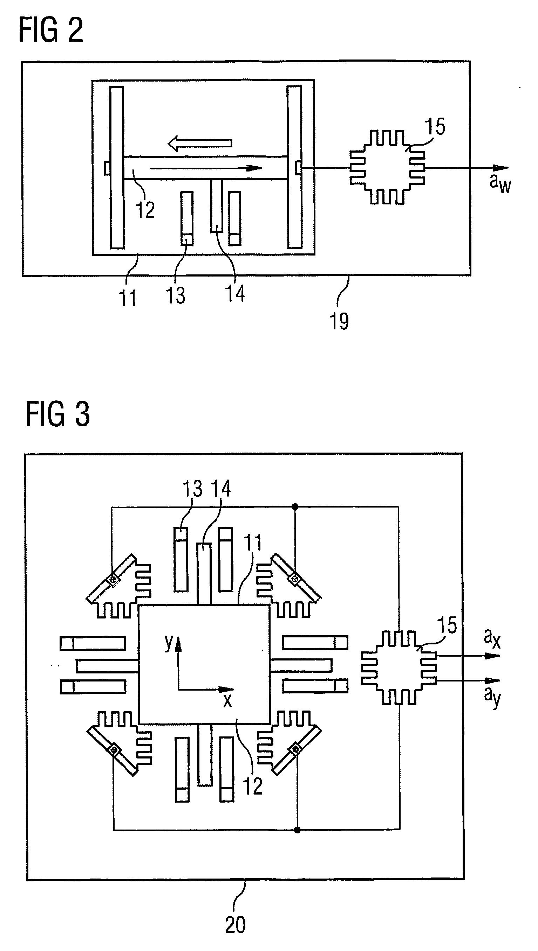

Fig. 2 zeigt das Funktionsprinzip eines kapazitiven Beschleunigungssensor 17, 18 oder 19 umfassend ein Sensorelement 11 - nachfolgend auch als G-Zelle 11 bezeichnet - in welcher eine seismische Masse 12 entlang einer Empfindlichkeitsachse w auslenkbar angeordnet ist. Die Funktionsweise basiert beispielsweise auf mikromechanischen Doppel-Plattenkondensatoren, welcher vorliegend fingerförmig ausgebildet ist. Zwischen zwei äußeren starren Platten 13 ist eine mittlere Platte 14 an der beweglich aufgehängten seismischen Masse 12 fixiert. Bei Beschleunigungen verschiebt sich die Masse 12, so dass sich die Kapazität ändert. Bekannt ist auch die Anordnung mehrerer fingerförmig ineinandergreifender Elemente hintereinander. Durch geschickten Aufbau kann eine Masse 12 auch für zwei Empfindlichkeitsachsen (x,y) verwendet werden, was in vorteilhafter Weise die Kosten reduziert.

Fig. 3 zeigt einen derartigen sog. kapazitiven X-Y-Beschleunigungssensor umfassend eine Sensorzelle 11, in welcher eine seismische Masse 12 entlang zweier Empfindlichkeitsachsen x und y auslenkbar angeordnet ist. Wie im Sensor nach Fig. 2 ist der G-Zelle 11 eine dezidierte Steuerschaltung 15 nachgeordnet, welche die Kapazität in ein verwertbares Ausgangssignal (a) umsetzt.

Im Normal-, d.h. Crash-Betrieb der Auswerteeinrichtung 3 werden sämtliche Ausgangssignale aᵤ, aᵥ, a_{w} bzw. a_{w}, aₓ, a_{y} der Sensoren 17,18,19 bzw. 19,20 mittels eines Safing-Algorithmus auf ihre Plausibilität durch Bildung einer gewichteten Summe Σ_{g} aus den Ausgangssignalen aᵤ, aᵥ, a_{w} bzw. a_{w}, aₓ, a_{y} überprüft. Beispielsweise parallel dazu werden die Ausgangssignale aᵤ,aᵥ,a_{w} bzw. a_{w}, aₓ, a_{y} mittels eines Crash-Unterscheidungsalgorithmus auswertet, wobei eine etwaige Freigabe der Rückhaltemittel nur bei festgestellter Plausibilität erfolgt. Erfindungsgemäß bevorzugt wird ,zuvor wenigstens eines der Ausgangssignale aᵤ, aᵥ, a_{w} b_{zw}. a_{w}, aₓ, a_{y} mit einem Schwellwert SW verglichen, so dass erst beim Überschreiten des Schwellwerts SW durch wenigstens eines der Ausgangssignale aᵤ, aᵥ, a_{w} bzw. a_{w}, aₓ, a_{y} eine Freigabe des Safing-Algorithmus erfolgt.

Um beim Starten und/oder während des Betriebs des Kraftfahrzeuges 1 die fehlerfreie Funktion der Steueranordnung 2 überprüfen zu können, ist es vorteilhaft, die Beschleunigungssensoren 17,18,19 bzw. 19,20 einem sog. Selbsttest unterziehen zu können. Zu diesem Zweck sendet im Test-Betrieb der Steueranordnung 2 zunächst die Auswerteeinheit 3, z.B. einer Mikrocontroller, ein Testsignal t an wenigstens zwei Beschleunigungssensoren 17,18,19 bzw. 19,20, um so Ausgangssignale aᵤ,aᵥ,a_{w} bzw. a_{w}, aₓ, a_{y} zu erzeugen, welche der Funktionsüberprüfung der Sensoren 17,18,19 bzw. 19,20 dienen. Im Fall eines sog. physikalischen Tests des/der Sensoren 17,18,19,20 bewirkt das Testsignal t eine Auslenkung der seismischen Masse 12 entlang der Empfindlichkeitsachse u,v,w,x,y. Die Kapazitätsänderung in der G-Zelle 11 wird in einer der G-Zelle 11 nachgeordneten Steuerschaltung 15 des Sensors 17,18,19,20 erkannt und setzt diese Erkenntnis in ein für die Mikrocontroller der Auswerteeinheit 3 verwertbares Ausgangssignal a um. Ein derartiger physikalischer Test erlaubt in vorteilhafter Weise sowohl eine Aussage über die Funktionstüchtigkeit der G-Zelle 11 wie auch über die Funktionstüchtigkeit der Steuerschaltung 15 des Beschleunigungssensors 17,18,19,20.

Es ist auch bekannt, nur der Steuerschaltung 15 des Beschleunigungssensors 17,18,19,20 ein Testsignal t zuzuführen, mittels welchem ein verwertbares Ausgangssignal a generiert oder simuliert wird. Zwar lassen sich bei einem derartigen rein elektronischen Test keine Aussagen über die Funktionstüchtigkeit der G-Zelle machen. Die alleinige Aussage über die elektronische Funktionstüchtigkeit der Steuerschaltung 15 des Sensors 17,18,19,20 mag in manchen Fällen aber ausreichen, insbesondere wenn andere Mechanismen zur Detektion einer defekten G-Zelle vorgesehen sind wie beispielsweise die Messung von Verschiebungen oder Schwankungen der Offset-Spannung des Sensors soweit diese charakteristisch für eine defekte G-Zelle sind.

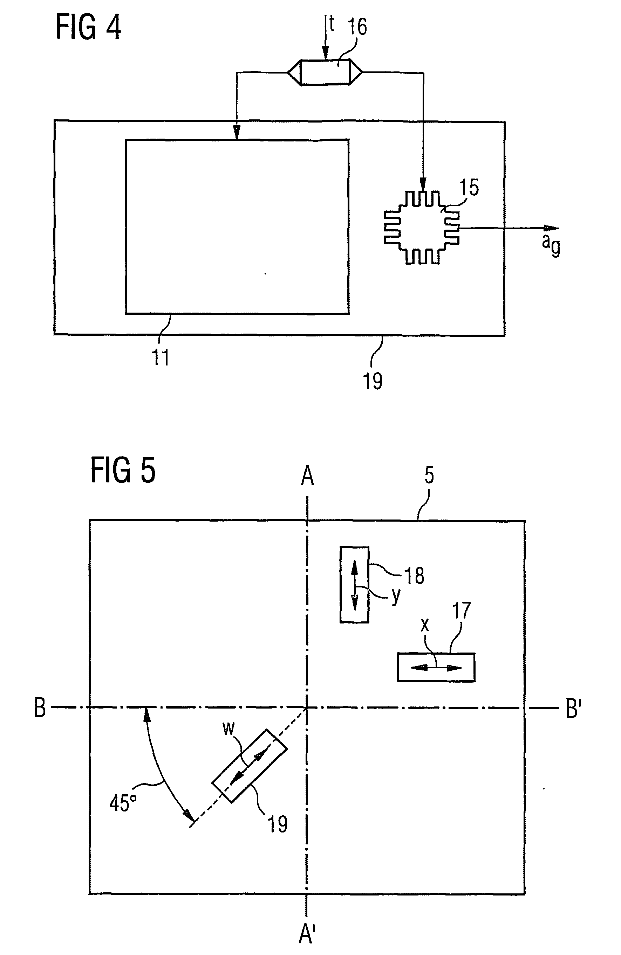

Fig. 4 zeigt einen erfindungsgemäßen Beschleunigungssensor 17,18,19 oder 20. Dieser ist gegenüber dem Beschleunigungssensor nach Fig. 2 insoweit modifiziert, als dieser zusätzlich mit einem Wichtungsmittel 16 in Wirkverbindung steht. Das Wichtungsmittel 16 kann Teil des Sensors 17,18,19,20 und/oder Teil der Steueranordnung 2, insb. Teil der Auswerteeinrichtung 3 sein. Dieses erlaubt in vorteilhafter Weise ein von der Auswerteeinheit 3 kommendes Testsignal t dergestalt zu verändern, dass bei einem physikalischen Test eine entsprechend gewichtete Auslenkung der seismischen Masse 12 selbst erfolgt. Als Wichtungsmittel kommen in diesem Fall insb. im Sensor gesondert ausgebildete sog. Testfinger oder dergleichen in Betracht. Während eines Selbsttests erfahren nun allein die Testfinger eine Auslenkung. An der gleichen seismischen Masse angeordnet bewirkt deren Auslenkung auch eine Auslenkung der für die Crash-Sensierung vorgesehenen Finger. Je nach angestrebten Wichtungsgrad eines Ausgangssignals werden mehr oder weniger Testfinger ausgelenkt. Werden demnach - plakativ ausgedrückt - statt standardgemäß beispielsweise zehn Testfinger vierzehn oder auch nur sieben Testfinger ausgelenkt, so bewirkt dies eine entsprechend verstärkte oder verminderte Auslenkung der für die Crash-Sensierung vorgesehenen Finger und ein dementsprechend gewichtetes Ausgangssignal. Aber auch ein elektronischer Test ist möglich, indem das Wichtungsmittel 16 ein abgeschwächtes oder verstärktes, d.h. gewichtetes Testsignal tg, der Steuerschaltung 15 zuführt. Als Wichtungsmittel 16 bieten sich daher spannungsmindernde elektronische Bauteile wie Widerstände oder spannungserhöhende elektronische Bauteile wie z.B. eine elektronische Ladungspumpe, oder dergleichen an. Ein derartiger, ein Wichtungsmittel 16 umfassender Beschleunigungssensor 17,18,19,20 erlaubt gegenüber unmodifizierten Beschleunigungssensoren die Ausgabe eines gewichteten Ausgangssignal a_{g} bei allseits empfangenen gleichen Selbsttestsignal t.

Von dieser Überlegung macht die vorliegende Erfindung nun gebrauch, indem sie wenigstens einen Sensor 19 vorsieht, welcher ein gewichtetes Ausgangssignal a_{g} ausgibt. Freilich ist, je nach Anordnung der Beschleunigungssensoren, die Erzeugung mehrerer gewichteter Ausgangssignale a_{ug}, a_{vg}, a_{wg}, a_{xg}, a_{yg} mitunter zweckmäßig. Verschiedene, erfindungsgemäß bevorzugte, Anordnungen zeigen Fig. 5 bis 7.

Fig. 5 zeigt das Sensorfeld 5 einer Steueranordnung 2 umfassend drei Beschleunigungssensoren 17,18,19 mit je einer G-Zelle 11, welche die Sensierung einer Beschleunigung g entlang einer Empfindlichkeitsachse w,x,y gestattet, welche jeweils unterschiedlich ausgerichtet sind. Sensor 17 dient der Sensierung in X-; Sensor 18 in Y-Richtung. Sensor 19 ist zu diesen geneigt angeordnet. In der nachgeschalteten Auswerteeinrichtung 3 kann im Crash-Betrieb bereits aufgrund von nur zwei der drei Beschleunigungssensoren 17,18 die Richtung und die Stärke einer auf das Fahrzeug 1 einwirkenden Beschleunigung g ermittelt werden. Das Signal a_{w} des dritten Beschleunigungssensors 19 wird hierbei zur Überprüfung einer der beiden errechneten Größen, der Richtung oder der Stärke der auf das Fahrzeug 1 einwirkenden Beschleunigung, herangezogen. Der dritte Sensor 19 übernimmt somit die Funktion eines Safing-Sensors und kann auf diese Weise die Auslösung des Rückhaltemittels 7,8,9,10 zumindest mittelbar verhindern, wenn der von ihm zur Verfügung gestellte Wert signifikant von einem aus den Signalen aₓ und a_{y} der beiden anderen Sensoren berechneten Wert abweicht.

Die Sensoren 17 und 18 sind im Beispiel unmodifiziert und handelsüblich, d.h. sie erzeugen nach Empfang eines Testsignals t im Test-Betrieb der Steueranordnung 2 ein ungewichtetes Ausgangssignal aₓ bzw. a_{y}. Sensor 19 ist ein erfindungsgemäß aufgebauter, mit einem Wichtungsmittel 16 in Wirkverbindung stehender Beschleunigungssensor 19, dessen Empfindlichkeitsachse w zur Empfindlichkeitsachse des X- bzw. Y-Sensors 18 bzw. 17, beispielsweise um 45° zu der zur X-Achse korrespondierenden Fahrzeugquerachse B-B', geneigt im Sensorfeld 5 angeordnet ist. Das Wichtungsmittel 16 ändert das gleiche Testsignal t derart gemäß einer Voreinstellung ab, dass ein definiert gewichtetes Ausgangssignal a_{g} erzeugt wird.

Eine erste Testvorschrift für die Sensoranordnung nach Fig. 5 sieht einen paarweisen Test der Sensoren dergestalt vor, dass ein ungewichtetes Ausgangssignal entweder des in X-Richtung sensierenden Sensors 17 oder des in Y-Richtung sensierenden Sensors 18 zusammen mit dem gewichteten Ausgangssignals des sog. Safing-Sensors 19 einer gemeinsamen Betrachtung unterzogen werden. Insbesondere wird die seismische Masse 12 des Sensorelements 11 des ersten Beschleunigungssensors 19 mit gewichteter Kraft in entgegengesetzter Richtung ihrer Empfindlichkeitsachse w ausgelenkt oder ein dementsprechendes Signal a_{wg} elektronisch generiert. Zudem wird die seismische Masse 12 des Sensorelements 11 des zweiten Beschleunigungssensors 17 oder 18 mit ungewichteter Kraft in Richtung ihrer Empfindlichkeitsachse x oder y ausgelenkt oder ein dementsprechendes Signal aₓ oder a_{y} elektronisch generiert. Freilich ist auch ein umgekehrter Vorgang denkbar, also die Erzeugung gewichtetes Ausgangssignal aₓ oder a_{y} in x- oder y-und ein ungewichtetes Signal a_{w} betr. die w-Richtung. Im erstgenannten Fall hat das Wichtungsmittel 16 das Testsignal t vorzugsweise derart abzuändern, dass das elektrische Ausgangssignal a_{wg} um den, mathematisch ausgedrückten, Wichtungsfaktor k_{w} gleich ½ * √2 (was etwa 0,707 entspricht) gewichtet ausgegeben wird. Bei andersartig zueinander geneigt angeordneten Sensoren ist der Wichtungsfaktor in Abhängigkeit der Winkelstellung entsprechend anzupassen.

Nach einer zweiten Testvorschrift werden alle Ausgangssignale der im Sensorfeld 5 angeordneten Sensoren 17, 18, 19 einer zeitgleichen gemeinsamen Betrachtung unterzogen. Insbesondere wird die seismische Masse 12 des Sensorelements 11 des ersten Beschleunigungssensors 19 mit gewichteter Kraft in entgegengesetzter Richtung ihrer Empfindlichkeitsachse w ausgelenkt oder ein dementsprechendes Signal a_{wg} elektronisch generiert. Zudem werden die seismischen Massen 12 der Sensorelemente 11 des zweiten Beschleunigungssensors 17,18 mit ungewichteter Kraft in Richtung ihrer Empfindlichkeitsachse x.und y ausgelenkt oder ein dementsprechendes Signal aₓ und x_{y} elektronisch generiert. In diesem Fall hat das Wichtungsmittel 16 das Testsignal t vorzugsweise derart abzuändern, dass das elektrische Ausgangssignal a_{w} um den, mathematisch ausgedrückten, Faktor k_{w} gleich √2 (was etwa 1,41 entspricht) gewichtet a_{wg} ausgegeben wird. Denkbare Alternativen seien wiederum ausdrücklich mitumfasst.

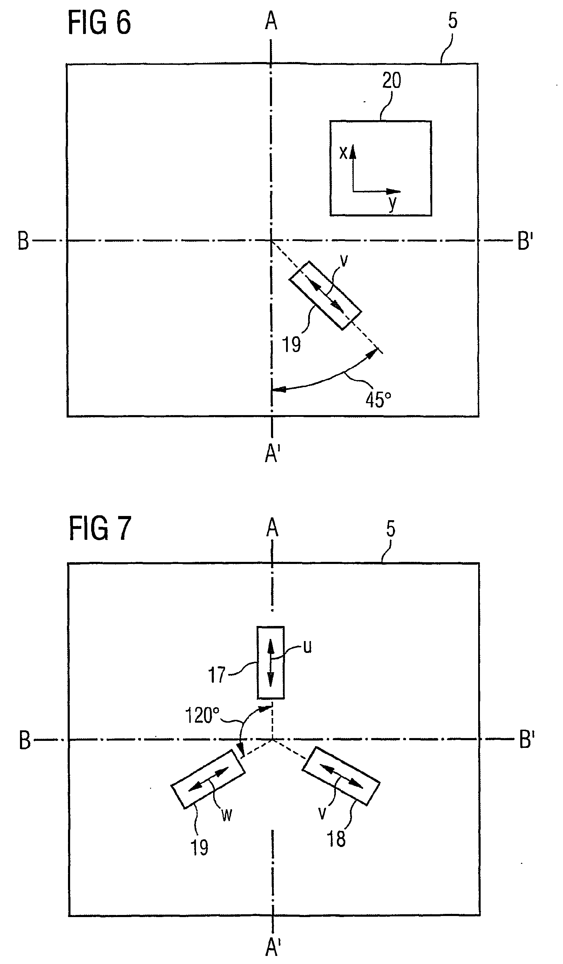

Fig. 6 zeigt eine alternative bevorzugte Sensoranordnung nach der Erfindung. Im Gegensatz zu der Anordnung nach Fig. 5 ist an Stelle einzelner in X- und Y-Richtung sensierender Sensoren 17 bzw. 18 ein sog. X-Y-Sensor 20 vorgesehen. Die Empfindlichkeitsachse v des Safing-Sensors 19 ist zu diesen Achsen wiederum geneigt angeordnet, im vorliegenden Fall um 45° zu der zur Y-Achse korrespondierenden Fahrzeuglängsachse A-A'. Auch in dieser Anordnung kann nach beiden zuvor beschriebenen Textvorschriften die Funktionstüchtigkeit der Steuerschaltung 2 geprüft werden.

Fig. 7 schließlich zeigt eine weitere bevorzugt Sensoranordnung nach der Erfindung. Im Gegensatz zu der Anordnung nach Fig. 5 sind von den wenigstens drei einzelnen, entlang einer Empfindlichkeitsachse u, v oder w sensierenden Sensoren 17,18,19 zusätzlich ein zweiter Sensor 18 geneigt zur Fahrzeuglängs- A-A' bzw. -querachse B-B' angeordnet, so dass die Beschleunigungssensoren 17,18,19 jeweils unterschiedlich ausgerichtete Empfindlichkeitsachsen u,v,w, aufweisen. Vorzugsweise sind die Sensoren 17,18,19 sternförmig, jeweils um 120° versetzt angeordnet. Eine Funktionsüberprüfung dieser Anordnung erfolgt nach einer dritten Testvorschrift, demnach alle im Sensorfeld 5 angeordneten Sensoren 17,18,19 einer zeitgleichen gemeinsamen Betrachtung wie zur zweiten Testvorschrift beschrieben unterzogen werden, wobei in diesem Fall das Wichtungsmittel 16 das Testsignal t gegenüber dem Safing-Sensor 19 derart abzuändern hat, dass das elektrische Ausgangssignal um den, mathematisch ausgedrückten, Faktor k_{w} gleich 2 gewichtet ausgegeben wird.

Gewichtete und ungewichtete Ausgangssignale der Beschleunigungssensoren 17,18,19,20 werden im Mikrokontroller 3 anhand eines Safing-Algorithmus verarbeitet, welcher selbst wiederum eine gewichtete Summe Σ_{g} bildet. Ergibt die Verarbeitung einen vorbestimmten Wert, beispielsweise annähernd Null, so ist dies ein Kennzeichen dafür, dass auch der Safing-Algorithmus selbst zuverlässig arbeitet. Soll der vorbestimmte Wert annähernd Null sein, so ist der Faktor k_{w} erfindungsgemäß bevorzugt so zu wählen, dass die Winkelstellungen zwischen den Sensoren letztlich einen Ausgleich finden.

Die vorliegende Erfindung erlaubt somit in vorteilhafter Weise nicht nur die Funktionsüberprüfung der G-Zelle 11 und/öder deren Steuerschaltung 15 eines Beschleunigungssensors 17,18,19,20, sondern auch die Überprüfung der Funktionstüchtigkeit eines dem Chrash-Algorithmus nebengeordneten Safing-Algorithmus. Die vorliegende Erfindung eignet sich daher insbesondere für Insassenschutzsysteme eines modernen Kraftfahrzeuges.

## Patentansprüche

1. Steueranordnung (2) für Insassenschutzmittel in einem Kraftfahrzeug (1),
- wobei der Steueranordnung (2) ein Sensorfeld (5) mit wenigstens zwei Beschleunigungssensoren (17,18,19 bzw. 19,20) zugeordnet ist, welche wenigstens zwei Sensorelemente (Gcells 11) aufweisen, die eine Beschleunigungssensierung entlang dreier Empfindlichkeitsachsen (u,v,w bzw. w,x,y) gestatten;
- wobei die Empfindlichkeitsachsen (u,v,w bzw. w,x,y) der Sensorelemente (11) der Beschleunigungssensoren (17,18,19 bzw. 19,20) eine Ebene aufspannen, welche nach Einbau der Steueranordnung (2) in einem Kraftfahrzeug (1) im Wesentlichen parallel verläuft zu einer durch eine Fahrzeuglängsachse (A-A') und eine Fahrzeugquerachse (B-B') festgelegten Ebene;
- mit wenigstens einer Auswerteeinrichtung (3) umfassend
- für den Normal- bzw. Crash-Betrieb
- eine Safing-Routine zur Überprüfung der Plausibilität sämtlicher Ausgangssignale (aᵤ, aᵥ, a_{w} bzw. a_{w}, aₓ, a_{y}) der Sensoren (17,18,19 bzw. 19,20) durch Bildung einer gewichteten Summe (Σ_{g}) aus den Ausgangssignalen (aᵤ, aᵥ, a_{w} bzw. a_{w}, aₓ, a_{y}), und
- eine Crash-Routine zur Auswertung der Ausgangssignale (aᵤ,aᵥ,a_{w} bzw. a_{w}, aₓ, a_{y}) ; und
- für einen Test-Betrieb
- eine Test-Routine, welche ein Testsignal (t) an wenigstens zwei Beschleunigungssensoren (17,18,19 bzw. 19,20) sendet zwecks Erzeugung von Ausgangssignalen (aᵤ,aᵥ,a_{w} bzw. a_{w}, aₓ, a_{y}) zur Funktionsüberprüfung der Sensoren (17,18,19 bzw. 19,20);
**dadurch gekennzeichnet,**
- **dass** mittels eines Wichtungsmittel (16) wenigstens ein Testsignal (t) um einen vorgebbaren Wichtungsfaktor (k_{w}) derart abänderbar ist, dass wenigstens ein Beschleunigungssensor (19) ein gewichtetes Ausgangssignal (a_{wg}) ausgibt; und
- **dass** während der Test-Routine die Ausgangssignale (aᵤ, aᵥ, a_{wg} bzw. a_{wg},aₓ,a_{y}) der im Sensorfeld (5) angeordneten Beschleunigungssensoren (17,18,19 bzw. 19,20) entsprechend der Safing-Routine verarbeitbar sind,
- wobei die gewichtete Summe (Σ_{g}) der Ausgangssignale (aᵤ, aᵥ, a_{wg} bzw. a_{wg}, aₓ, a_{y}) bei funktionstüchtigen Beschleunigungssensoren (17,18,19 bzw. 19,20) einen vorbestimmten Wert ergeben soll; und
- wobei eine einwandfreie Funktion der Steueranordnung (2) feststellbar ist, wenn die gewichtete Summe (Σ_{g}) der während der Test-Routine tatsächlich gelieferten Ausgangssignale (aᵤ, aᵥ, a_{wg} bzw. a_{wg}, aₓ, a_{y}) annähernd den vorbestimmten Wert ergibt.

2. Steueranordnung (2) nach Anspruch 1, **gekennzeichnet durch** ein Sensorfeld (5) mit drei Beschleunigungssensoren (17,18,19) umfassend je ein Sensorelement (11) für je eine Empfindlichkeitsrichtung (u,v,w bzw. w, x, y).

3. Steueranordnung nach Anspruch 1, **gekennzeichnet durch** ein Sensorfeld (5) mit einem ersten Beschleunigungssensor (19) mit einem Sensorelement (11) für eine vorbestimmte Empfindlichkeitsrichtung (w) und **durch** einen zweiten Beschleunigungssensor mit zwei Sensorelementen (11) für zwei vorbestimmte Empfindlichkeitsrichtungen (x,y).

4. Steueranordnung nach Anspruch 1, **gekennzeichnet durch** einen ersten Beschleunigungssensor (19) mit einem Sensorelement (11) für eine vorbestimmte Empfindlichkeitsrichtung (w) und **durch** einen zweiten Beschleunigungssensor (20) mit einem Sensorelement (11) für zwei vorbestimmte Empfindlichkeitsrichtungen (x,y).

5. Steueranordnung (2) nach einem der vorherigen Ansprüche, **dadurch gekennzeichnet, dass** das Wichtungsmittel (16) Teil der Auswerteeinrichtung (3) und/oder Teil des/der Beschleunigungssensoren (17,18,19,20) ist.

6. Steueranordnung (2) nach einem der vorherigen Ansprüche, **dadurch gekennzeichnet, dass** das Wichtungsmittel (16) mehrere sog. Testfinger, ein spannungsminderndes Bauteil wie ein Widerstand oder ein spannungserhöhendes Bauteil wie z.B. eine Ladungspumpe oder ein anderes geeignetes elektronisches und/oder mechanisches Bauteil umfasst.

7. Verfahren zur Funktionsüberprüfung einer Steueranordnung (2) für Insassenschutzmittel (7,8,9,10) in einem Kraftfahrzeug (1), insbesondere einer Steueranordnung (2) nach einem der vorherigen Ansprüche,
- wobei der Steueranordnung (2) ein Sensorfeld (5) mit wenigstens zwei Beschleunigungssensoren (17,18,19 bzw. 19,20) zugeordnet ist, welche wenigstens zwei Sensorelemente (Gcells 11) aufweisen, die eine Beschleunigungssensierung entlang dreier Empfindlichkeitsachsen (u,v,w bzw. w,x,y) gestatten;
- wobei die Empfindlichkeitsachsen (u,v,w bzw. w,x,y) der Sensorelemente (11) der Beschleunigungssensoren (17,18,19 bzw. 19,20) eine Ebene aufspannen, welche nach Einbau der Steueranordnung (2) in einem Kraftfahrzeug (1) im Wesentlichen parallel ist zu einer durch eine Fahrzeuglängsachse (A-A') und eine Fahrzeugquerachse (B-B') festgelegten Ebene;
- wobei die Steueranordnung (2) wenigstens eine Auswerteeinrichtung (3) aufweist, welche
- im Normal- bzw. Crash-Betrieb
- sämtliche Ausgangssignale (aᵤ,aᵥ,a_{w} bzw. a_{w},aₓ,a_{y}) der Sensoren (17,18,19 bzw. 19,20) mittels eines Safing-Algorithmus auf ihre Plausibilität durch Bildung einer gewichteten Summe (Σ_{g}) aus den Ausgangssignalen (aᵤ, aᵥ, a_{w} bzw. a_{w}, aₓ, a_{y}) überprüft, und
- die Ausgangssignale (aᵤ,aᵥ,a_{w} bzw. a_{w},aₓ,a_{y}) mittels eines Crash-Unterscheidungsalgorithmus auswertet; und
- in einem Test-Betrieb
- ein Testsignal (t) an wenigstens zwei Beschleunigungssensoren (17,18,19 bzw. 19,20) sendet zwecks Erzeugung von Ausgangssignalen (aᵤ, aᵥ, a_{w} bzw. a_{w}, aₓ, a_{y}) zur Funktionsüberprüfung der Sensoren (17,18,19 bzw. 19,20);
**dadurch gekennzeichnet,**
- **dass** wenigstens ein Testsignal (t) eine Wichtung (k_{w}) dergestalt erfährt, dass wenigstens ein Beschleunigungssensor (19) ein gewichtetes Ausgangssignal (a_{wg}) ausgibt; und
- **dass** im Test-Betrieb die Ausgangssignale (aᵤ, aᵥ, a_{wg} bzw. a_{wg}, aₓ, a_{y}) der im Sensorfeld (5) angeordneten Beschleunigungssensoren (17,18,19 bzw. 19,20) entsprechend dem Safing-Algorithmus verarbeitet werden,
- wobei die gewichtete Summe (Σ_{g}) der Ausgangssignale (aᵤ, aᵥ, a_{wg} bzw. a_{wg}, aₓ, a_{y}) bei funktionstüchtigen Beschleunigungssensoren (17,18,19 bzw. 19,20) einen vorbestimmten Wert ergeben soll; und
- wobei eine einwandfreie Funktion der Steueranordnung (2) festgestellt wird, wenn die gewichtete Summe (Σ_{g}) der während des Test-Betriebs tatsächlich gelieferten Ausgangssignale (aᵤ, aᵥ, a_{wg} bzw., a_{w}, aₓ, a_{y}) annähernd den vorbestimmten Wert ergibt.

8. Verfahren nach Anspruch 7, **dadurch gekennzeichnet, dass** wenigstens eines der Ausgangssignale (aᵤ, aᵥ, a_{w} bzw. a_{w}, aₓ, a_{y}) mit einem Schwellwert (SW) verglichen wird, wobei erst beim Überschreiten des Schwellwerts (SW) durch wenigstens eines der Ausgangssignale (aᵤ,aᵥ,a_{w} bzw. a_{w}, aₓ, a_{y}) eine Freigabe des Safing-Algorithmus erfolgt.

9. Verfahren nach Anspruch 7 oder 8, **dadurch gekennzeichnet, dass** das Testsignal (t) der Steuerschaltung (15) des Sensors (17,18,19,20) dergestalt zugeführt wird, dass ein Ausgangssignals (aᵤ,aᵥ,a_{wg} bzw. a_{wg},aₓ,a_{y}) elektronisch generiert bzw. simuliert wird.

10. Verfahren nach Anspruch 7 oder 8, **dadurch gekennzeichnet, dass** das Testsignal (t) dem Sensorelement (Gcell 11) des Sensors (17,18,19,20) dergestalt zugeführt wird, dass die seismische Masse (12) des Sensorelements (11) in einer vorbestimmten Richtung (u,v,w,x,y) ausgelenkt wird.

11. Verfahren nach einem der Ansprüche 7 bis 10, **gekennzeichnet durch** die Verwendung eines sog. Safing-Sensors (19) mit einem Sensorelement (11), dessen Empfindlichkeitsachse (w) schräg zu zweien senkrecht zueinander stehenden Empfindlichkeitsachsen (x,y) angeordnet ist, insb. geneigt um einen Winkel von 45°, 135° oder 225° zu den senkrecht zueinander stehenden Empfindlichkeitsachsen (x bzw. y).

12. Verfahren nach Anspruch 11, **gekennzeichnet durch** die Verwendung zweier Sensoren (17,18) umfassend je ein Sensorelement (11) mit jeweils einer zueinander senkrecht stehenden Empfindlichkeitsachse (x,y).

13. Verfahren nach Anspruch 11, **gekennzeichnet durch** die Verwendung eines sog. X-Y-Sensors umfassend zwei Sensorelemente (11) mit jeweils einer zueinander senkrecht stehenden Empfindlichkeitsachsen (x,y).

14. Verfahren nach Anspruch 11, **gekennzeichnet durch** die Verwendung eines sog. X-Y-Sensors.(20) umfassend ein Sensorelement (11) mit zweien zueinander senkrecht stehenden Empfindlichkeitsachsen (x,y).

15. Verfahren nach Anspruch 9 oder 10 und einem der Ansprüche 11 bis 14, **dadurch gekennzeichnet, dass** die seismischen Massen (12) zweier Sensorelemente (11) in einer vorbestimmten Richtung ausgelenkt oder dementsprechende Signale elektronisch generiert bzw. simuliert werden, insbesondere
- dass die seismische Masse (12) des Sensorelements (11) eines ersten Beschleunigungssensors (19) mit gewichteter Kraft in entgegengesetzter Richtung ihrer Empfindlichkeitsachse (w) ausgelenkt oder ein dementsprechendes Signal (a_{wg}) elektronisch generiert bzw. simuliert wird, und
- dass die seismische Masse (12) des Sensorelements (11) eines zweiten Beschleunigungssensors (17,18 ; 20) mit ungewichteter Kraft in Richtung ihrer Empfindlichkeitsachse (x oder y) ausgelenkt oder ein dementsprechendes Signal (aₓ oder a_{y}) elektronisch generiert bzw. simuliert wird;
- oder umgekehrt.

16. Verfahren nach Anspruch 15, **gekennzeichnet durch** einen Wichtungsfaktor (k_{w}) von ein Halb der Wurzel aus zwei (½ * √2 ≈ 0,707).

17. Verfahren nach Anspruch 9 oder 10 und einem der Ansprüche 11 bis 14, **dadurch gekennzeichnet, dass** die seismischen Massen (12) dreier Sensorelemente (11) in einer vorbestimmten Richtung ausgelenkt oder dementsprechende Signale elektronisch generiert bzw. simuliert werden, insbesondere
- dass die seismische Masse (12) des Sensorelements (11) eines ersten Beschleunigungssensors (19) mit gewichteter Kraft in entgegengesetzter Richtung ihrer Empfindlichkeitsachse (w) ausgelenkt oder ein dementsprechendes Signal (a_{wg}) elektronisch generiert bzw. simuliert wird;
- dass die seismische Masse (12) des Sensorelements (11) eines zweiten Beschleunigungssensors (17,18 ; 20) mit ungewichteter Kraft in Richtung ihrer Empfindlichkeitsachse (x oder y ; u) ausgelenkt oder ein dementsprechendes Signal (aₓ oder a_{y} ; aᵤ) elektronisch generiert bzw. simuliert wird; und
- dass die seismische Masse (12) des zweiten oder eines dritten Sensorelements (11) der Beschleunigungssensoren (11,12,13,14) mit ungewichteter Kraft in Richtung ihrer Empfindlichkeitsachse (y oder x ; v) ausgelenkt oder ein dementsprechendes Signal (a_{y} oder aₓ; aᵥ) elektronisch generiert bzw. simuliert wird;
- oder umgekehrt.

18. Verfahren nach Anspruch 17, **gekennzeichnet durch** einen Wichtungsfaktor (k) von Wurzel aus zwei (√2 ≈ 1,41).

19. Verfahren nach einem der Ansprüche 7 bis 10, **gekennzeichnet durch** eine sternförmige Anordnung von drei Sensoren (17,18,19), umfassend je ein Sensorelement (11) mit geneigt zueinander angeordneten Empfindlichkeitsachsen (u,v,w), insb. mit jeweils einer zueinander in einem Winkel von 120° stehenden Empfindlichkeitsachse (u,v,w).

20. Verfahren nach Anspruch 9 oder 10 und 19, **dadurch gekennzeichnet, dass** die seismische Massen (12) dreier Sensorelemente (11) in einer vorbestimmten Richtung ausgelenkt oder dementsprechende Signale elektronisch generiert bzw. simuliert werden, insbesondere gemäß den Merkmalen nach Anspruch 17.

21. Verfahren nach Anspruch 20, **gekennzeichnet durch** einen Wichtungsfaktor von 2.

22. Verfahren nach einem der vorherigen Verfahrensansprüche, **dadurch gekennzeichnet, dass** die gewichtete Summe (Σ_{g}) der Ausgangssignale (aᵤ, aᵥ, a_{wg} bzw. a_{wg}, aₓ, a_{y}) annähernd Null sein muss, um im Test-Betrieb eine einwandfreie Funktion der Steueranordnung (17,18,19 bzw. 19,20) zu diagnostizieren.

23. Verfahren nach einem der Ansprüche 10 bis 22, **gekennzeichnet durch** eine kapazitive Testauslenkung der seismischen Masse (12) der Beschleunigungssensoren (17,18,19 bzw. 19,20).

## Claims

1. Control arrangement (2) for occupant protection means in a motor vehicle (1),
- with a sensor field (5) with at least two acceleration sensors (17, 18, 19 or 19, 20) being assigned to the control arrangement (2), said acceleration sensors (17, 18, 19 or 19, 20) having at least two sensor elements (g-cells 11), which allow acceleration sensing along three sensitivity axes (u, v, w or w, x, y);
- with the sensitivity axes (u, v, w or w, x, y) of the sensor elements (11) of the acceleration sensors (17, 18, 19 or 19, 20) spanning a plane, which after the control arrangement (2) has been integrated in a motor vehicle (1) is essentially parallel to a plane defined by a longitudinal axis of the vehicle (A-A') and a transverse axis of the vehicle (B-B');
- with at least one evaluation device (3) comprising
- for normal and crash mode
- a safing routine to test the plausibility of all output signals (aᵤ, aᵥ, a_{w} and a_{w}, aₓ, a_{y}) of the sensors (17, 18, 19 or 19, 20) by creating a weighted sum (Σ_{g}) from the output signals (aᵤ, aᵥ, a_{w} and a_{w}, aₓ, a_{y}); and
- a crash routine to evaluate the output signals (aᵤ, aᵥ, a_{w} and a_{w}, aₓ, a_{y}); and
- for test mode
- a test routine, which sends a test signal (t) to at least two acceleration sensors (17, 18, 19 or 19, 20) to generate output signals (aᵤ, aᵥ, a_{w} and a_{w}, aₓ, a_{y}) to test the operation of the sensors (17, 18, 19 or 19, 20);
**characterised in that**
- at least one test signal (t) can be modified by means of a weighting means (16) by a predefinable weighting factor (k_{w}) such that at least one acceleration sensor (19) outputs a weighted output signal (a_{wg}); and
- during the test routine the output signals (aᵤ, aᵥ, a_{wg} and a_{wg}, aₓ, a_{y}) of the acceleration sensors (17, 18, 19 or 19, 20) arranged in the sensor field (5) can be processed according to the safing routine,
- with the weighted sum (Σ_{g}) of the output signals (aᵤ, aᵥ, a_{wg} and a_{wg}, aₓ, a_{y}) producing a predefined value when the acceleration sensors (17, 18, 19 or 19, 20) are capable of operation; and
- with the possibility of determining error-free operation of the control arrangement (2), when the weighted sum (Σ_{g}) of the output signals (aᵤ, aᵥ, a_{wg} and a_{wg}, aₓ, a_{y}) actually supplied during the test routine approximately produces the predefined value.

2. Control arrangement (2) according to claim 1, **characterised by** a sensor field (5) with three acceleration sensors (17, 18, 19) each comprising a sensor element (11) for one sensitivity direction (u, v, w or w, x, y) each.

3. Control arrangement according to claim 1, **characterised by** a sensor field (5) with a first acceleration sensor (19) with a sensor element (11) for a predefined sensitivity direction (w) and by a second acceleration sensor with two sensor elements (11) for two predefined sensitivity directions (x, y).

4. Control arrangement according to claim 1, **characterised by** a first acceleration sensor (19) with a sensor element (11) for a predefined sensitivity direction (w) and by a second acceleration sensor (20) with a sensor element (11) for two predefined sensitivity directions (x, y).

5. Control arrangement (2) according to one of the preceding claims, **characterised in that** the weighting means (16) is part of the evaluation device (3) and/or part of the acceleration sensor (s) (17, 18, 19, 20).

6. Control arrangement (2) according to one of the preceding claims, **characterised in that** the weighting means (16) comprises a plurality of so-called test fingers, a voltage-reducing component such as a resistor or a voltage-increasing component such as a charging pump or another suitable electronic and/or mechanical component.

7. Method for testing the operation of a control arrangement (2) for occupant protection means (7, 8, 9, 10) in a motor vehicle (1), in particular a control arrangement (2) according to one of the preceding claims,
- with a sensor field (5) with at least two acceleration sensors (17, 18, 19 or 19, 20) being assigned to the control arrangement (2), said acceleration sensors (17, 18, 19 or 19, 20) having at least two sensor elements (g-cells 11), which allow acceleration sensing along three sensitivity axes (u, v, w or w, x, y);
- with the sensitivity axes (u, v, w or w, x, y) of the sensor elements (11) of the acceleration sensors (17, 18, 19 or 19, 20) spanning a plane, which after the control arrangement (2) has been integrated in a motor vehicle (1) is essentially parallel to a plane defined by a longitudinal axis of the vehicle (A-A') and a transverse axis of the vehicle (B-B');
- with the control arrangement (2) having at least one evaluation device (3), which
- in normal and crash mode
- tests the plausibility of all output signals (aᵤ, aᵥ, a_{w} and a_{w}, aₓ, a_{y}) of the sensors (17, 18, 19 or 19, 20) by means of a safing algorithm by creating a weighted sum (Σ_{g}) from the output signals (aᵤ, aᵥ, a_{w} and a_{w}, aₓ, a_{y}) and
- evaluates the output signals (aᵤ, aᵥ, a_{w} and a_{w}, aₓ, a_{y}) by means of a crash discrimination algorithm; and
- in test mode
- sends a test signal (t) to at least two acceleration sensors (17, 18, 19 or 19, 20) to generate output signals (aᵤ, aᵥ, a_{w} and a_{w}, aₓ, a_{y}) to test the operation of the sensors (17, 18, 19 or 19, 20);
**characterised in that**
- at least one test signal (t) is subjected to a weighting (k_{w}) such that at least one acceleration sensor (19) outputs a weighted output signal (a_{wg}); and
- in test mode the output signals (aᵤ, aᵥ, a_{wg} and a_{wg}, aₓ, a_{y}) of the acceleration sensors (17, 18, 19 or 19, 20) arranged in the sensor field (5) can be processed according to the safing algorithm,
- with the weighted sum (Σ_{g}) of the output signals (aᵤ, aᵥ, a_{wg} and a_{wg}, aₓ, a_{y}) producing a predefined value when the acceleration sensors (17, 18, 19 or 19, 20) are capable of operation; and
- with the possibility of determining error-free operation of the control arrangement (2), when the weighted sum (Σ_{g}) of the output signals (aᵤ, aᵥ, a_{wg} and a_{wg}, aₓ, a_{y}) actually supplied in test mode approximately produces the predefined value.

8. Method according to claim 7, **characterised in that** at least one of the output signals (aᵤ, aᵥ, a_{w} and a_{w}, aₓ, a_{y}) is compared with a threshold value (SW), with the safing algorithm only being released when at least one of the output signals (aᵤ, aᵥ, a_{w} and a_{w}, aₓ, a_{y}) exceeds the threshold value (SW) .

9. Method according to claim 7 or 8, **characterised in that** the test signal (t) is supplied to the control circuit (15) of the sensor (17, 18, 19, 20) such that an output signal (aᵤ, aᵥ, a_{w} and a_{w}, aₓ, a_{y}) is electronically generated or simulated.

10. Method according to claim 7 or 8, **characterised in that** the test signal (t) is supplied to the sensor element (g-cell 11) of the sensor (17, 18, 19, 20) such that the seismic mass (12) of the sensor element (11) is displaced in a predefined direction (u, v, w, x, y).

11. Method according to one of claims 7 to 10, **characterised by** the use of a so-called safing sensor (19) with a sensor element (11), the sensitivity axis (w) of which is arranged at an oblique angle to two sensitivity axes (x, y) that are perpendicular to each other, in particular at an angle of 45°, 135° or 225° to the mutually perpendicular sensitivity axes (x and y).

12. Method according to claim 11, **characterised by** the use of two sensors (17, 18) each comprising a sensor element (11) each with a sensitivity axis (x, y) perpendicular to the other.

13. Method according to claim 11, **characterised by** the use of a so-called x-y sensor comprising two sensor elements (11), each with a sensitivity axis (x, y) perpendicular to the other.

14. Method according to claim 11, **characterised by** the use of a so-called x-y sensor (20) comprising a sensor element (11) with two sensitivity axes (x, y) perpendicular to each other.

15. Method according to claim 9 or 10 and one of claims 11 to 14, **characterised in that** the seismic masses (12) of two sensor elements (11) are displaced in a predefined direction or corresponding signals are generated or simulated electronically, in particular
- the seismic mass (12) of the sensor element (11) of a first acceleration sensor (19) is displaced with weighted force in the opposite direction to its sensitivity axis (w) or a corresponding signal (a_{wg}) is generated or simulated electronically, and
- the seismic mass (12) of the sensor element (11) of a second acceleration sensor (17, 18; 20) is displaced with unweighted force in the direction of its sensitivity axis (x or y) or a corresponding signal (aₓ or a_{y}) is generated or simulated electronically;
- or vice versa.

16. Method according to claim 15, **characterised by** a weighting factor (kw) of half the root of two (½ * √2 ≈ 0.707).

17. Method according to claim 9 or 10 and one of claims 11 to 14, **characterised in that** the seismic masses (12) of three sensor elements (11) are displaced in a predefined direction or corresponding signals are generated or simulated electronically, in particular
- the seismic mass (12) of the sensor element (11) of a first acceleration sensor (19) is displaced with weighted force in the opposite direction to its sensitivity axis (w) or a corresponding signal (a_{wg}) is generated or simulated electronically;
- the seismic mass (12) of the sensor element (11) of a second acceleration sensor (17, 18; 20) is displaced with unweighted force in the direction of its sensitivity axis (x or y; u) or a corresponding signal (aₓ or a_{y}; a_{y}) is generated or simulated electronically; and
- the seismic mass (12) of the second or a third sensor element (11) of the acceleration sensors (11, 12, 13, 14) is displaced with unweighted force in the direction of its sensitivity axis (y or x; v) or a corresponding signal (a_{y} or aₓ; aᵥ) is generated or simulated electronically;
- or vice versa.

18. Method according to claim 17, **characterised by** a weighting factor (k) of the root of two (√2 ≈ 1.41).

19. Method according to one of claims 7 to 10, **characterised by** a star-shaped arrangement of three sensors (17, 18, 19), each comprising a sensor element (11) with sensitivity axes (u, v, w) arranged at an angle to each other, in particular each with a sensitivity axis (u, v, w) at an angle of 120° to each other.

20. Method according to claim 9 or 10 and 19, **characterised in that** the seismic masses (12) of three sensor elements (11) are displaced in a predefined direction or corresponding signals are generated or simulated electronically, in particular according to the features of claim 17.

21. Method according to claim 20, **characterised by** a weighting factor of 2.

22. Method according to one of the preceding method claims, **characterised in that** the weighted sum (Σ_{g}) of the output signals (aᵤ, aᵥ, a_{wg} and a_{wg}, aₓ, a_{y}) must be approximately zero, in order to diagnose error-free operation of the control arrangement (17, 18, 19 or 19, 20) in test mode.

23. Method according to one of claims 10 to 22, **characterised by** a capacitive test displacement of the seismic mass (12) of the acceleration sensors (17, 18, 19 or 19, 20).

## Revendications

1. Dispositif de commande (2) pour des éléments de protection des occupants dans un véhicule à moteur (1),
- dans lequel ce dispositif de commande (2) est associé à une matrice de capteurs (5) comportant au moins deux capteurs d'accélération (17, 18, 19 ou respectivement 19, 20) qui sont munis d'au moins deux éléments sensibles (g-cells 11) permettant de détecter une accélération le long de trois axes de sensibilité (u, v, w ou respectivement w, x, y) ;
- dans lequel les axes de sensibilité (u, v, w ou respectivement w, x, y) des éléments sensibles (11) des capteurs d'accélération (17, 18, 19 ou respectivement 19, 20) constituent un plan qui, une fois le dispositif de commande (2) monté dans le véhicule à moteur (1), est essentiellement parallèle au plan constitué par l'axe longitudinal A-A' du véhicule et l'axe transversal B-B' du véhicule ;
- avec au moins un dispositif d'évaluation (3) qui comporte
- pour le fonctionnement normal également appelé fonctionnement de détection d'accident
- une routine de sécurité servant à vérifier la plausibilité de l'ensemble des signaux de sortie (aᵤ, aᵥ, a_{w} ou respectivement a_{w}, aₓ, a_{y}) des capteurs (17, 18, 19 ou respectivement 19, 20) en établissant une somme pondérée (Σ_{g}) sur la base des signaux de sortie (aᵤ, aᵥ, a_{w} ou respectivement a_{w}, aₓ, a_{y}), et
- une routine de détection d'accident pour évaluer les signaux de sortie (aᵤ, aᵥ, a_{w} ou respectivement a_{w}, aₓ, a_{y}); et
- pour un fonctionnement en mode d'essai
- une routine d'essai qui consiste à envoyer un signal d'essai (t) à au moins deux capteurs d'accélération (17, 18, 19 ou respectivement 19, 20) pour générer des signaux de sortie (aᵤ, aᵥ, a_{w} ou respectivement a_{w}, aₓ, a_{y}) servant à vérifier le fonctionnement des capteurs (17, 18, 19 ou respectivement 19, 20);
**caractérisé en ce que**
- au moins un signal d'essai (t) peut être modifié par un dispositif de pondération (16) en appliquant un facteur de pondération (k_{w}) pour ainsi faire en sorte qu'au moins
un capteur d'accélération (19) génère un signal de sortie pondéré (a_{wg}) ; et
- pendant la mise en oeuvre de la routine d'essai, les signaux de sortie (aᵤ, aᵥ, a_{wg} ou respectivement a_{wg}, aₓ, a_{y}) des capteurs d'accélération (17, 18, 19 ou respectivement 19, 20) disposés dans la matrice de capteurs (5) peuvent être traités selon la routine de sécurité,
- dans laquelle la somme pondérée (Σ_{g}) des signaux de sortie (aᵤ, aᵥ, a_{wg} ou respectivement a_{wg}, aₓ, a_{y}) est censée atteindre une valeur définie au préalable si les capteurs d'accélération (17, 18, 19 ou respectivement 19, 20) fonctionnent correctement ; et
- dans laquelle l'équivalence approximative entre la valeur prédéfinie et la somme pondérée (Σ_{g}) des signaux de sortie (aᵤ, aᵥ, a_{wg} ou respectivement a_{wg}, aₓ, a_{y}) réellement fournis lors de la routine d'essai indique un fonctionnement correct du dispositif de commande (2).

2. Dispositif de commande (2) selon la revendication 1, **caractérisé par** une matrice de capteurs (5) avec trois capteurs d'accélération (17, 18, 19) comportant chacun un élément sensible (11) pour une des directions de sensibilité (u, v, w ou respectivement w, x, y).

3. Dispositif de commande selon la revendication 1, **caractérisé par** une matrice de capteurs (5) avec un premier capteur d'accélération (19) comportant un élément sensible (11) pour une direction de sensibilité prédéfinie (w) et par un deuxième capteur d'accélération avec deux éléments sensibles (11) pour deux directions de sensibilité (x, y) prédéfinies.

4. Dispositif de commande selon la revendication 1, **caractérisé par** un premier capteur d'accélération (19) avec un élément sensible (11) pour une direction de sensibilité prédéfinie (w) et par un deuxième capteur d'accélération (20) avec un élément sensible (11) pour deux directions de sensibilité (x, y) prédéfinies.

5. Dispositif de commande (2) selon l'une quelconque des revendications précédentes, **caractérisé en ce que** le dispositif de pondération (16) est partie intégrante du dispositif d'évaluation (3) et/ou du/des capteur(s) d'accélération (17, 18, 19, 20).

6. Dispositif de commande (2) selon l'une quelconque des revendications précédentes, **caractérisé en ce que** le dispositif de pondération (16) comporte plusieurs éléments digitiformes appelés doigts d'essai, un composant qui diminue la tension tel qu'une résistance ou bien un composant qui augmente la tension tel qu'un convertisseur à pompe de charge et/ou d'autres composants électroniques et/ou mécaniques appropriés.

7. Procédé de vérification du fonctionnement d'un dispositif de commande (2) pour un élément de protection des occupants (7, 8, 9, 10) dans un véhicule à moteur, plus particulièrement d'un dispositif de commande (2) selon l'une quelconque des revendications précédentes,
- dans lequel le dispositif de commande (2) est associé à une matrice de capteurs (5) comportant au moins deux capteurs d'accélération (17, 18, 19 ou respectivement 19, 20) qui sont munis d'au moins deux éléments sensibles (g-cells 11) permettant la détection d'une accélération le long de trois axes de sensibilité (u, v, w ou respectivement w, x, y) ;
- dans lequel les axes de sensibilité (u, v, w ou respectivement w, x, y) des éléments sensibles (11) des capteurs d'accélération (17, 18, 19 ou respectivement 19, 20) constituent un plan qui, une fois le dispositif de commande (2) monté dans le véhicule à moteur (1), est essentiellement parallèle au plan constitué par l'axe longitudinal A-A' du véhicule et l'axe transversal B-B' du véhicule ;
- dans lequel le dispositif de commande (2) comporte au moins un dispositif d'évaluation (3) qui
- lorsqu'il fonctionne en mode normal également appelé fonctionnement de détection d'accident
- vérifie la plausibilité de l'ensemble des signaux de sortie (aᵤ, aᵥ, a_{w} ou respectivement a_{w}, aₓ, a_{y}) des capteurs (17, 18, 19 ou respectivement 19, 20) au moyen d'un algorithme de sécurité en établissant une somme pondérée (Σ_{g}) sur la base des signaux de sortie (aᵤ, aᵥ, a_{w} ou respectivement a_{w}, aₓ, a_{y}), et
- évalue les signaux de sortie (aᵤ, aᵥ, a_{w} ou respectivement a_{w}, aₓ, a_{y}) au moyen d'un algorithme de différenciation d'accident ; et
- lorsqu'il fonctionne en mode d'essai
- envoie un signal d'essai (t) à au moins deux capteurs de décélération (17, 18, 19 ou respectivement 19, 20) pour générer des signaux de sortie (aᵤ, aᵥ, a_{w} ou respectivement a_{w}, aₓ, a_{y}) servant à vérifier le fonctionnement des capteurs (17, 18, 19 ou respectivement 19, 20) ;
**caractérisé en ce que**
- au moins un signal d'essai (t) est soumis à une pondération (k_{w}) de manière à ce qu'au moins un capteur d'accélération (19) génère un signal de sortie pondéré (a_{wg}) ; et
- lors du fonctionnement en mode d'essai, les signaux de sortie (aᵤ, aᵥ, a_{wg} ou respectivement a_{wg}, aₓ, a_{y}) des capteurs d'accélération (17, 18, 19 ou respectivement 19, 20) disposés dans la matrice de capteurs (5) sont traités selon l'algorithme de sécurité,
- dans lequel la somme pondérée (Σ_{g}) des signaux de sortie (aᵤ, aᵥ, a_{wg} ou respectivement a_{wg}, aₓ, a_{y}) est censée atteindre une valeur définie au préalable si les capteurs d'accélération (17, 18, 19 ou respectivement 19, 20) fonctionnent correctement ; et
- dans lequel l'équivalence approximative entre la valeur prédéfinie et la somme pondérée (Σ_{g}) des signaux de sortie (aᵤ, aᵥ, a_{wg} ou respectivement a_{wg}, aₓ, a_{y}) réellement fournis en mode d'essai indique un fonctionnement correct du dispositif de commande (2).

8. Procédé selon la revendication 7, **caractérisé en ce qu'**au moins un des signaux de sortie (aᵤ, aᵥ, a_{w}, ou respectivement a_{w}, aₓ, a_{y}) est comparé avec une valeur seuil (SW) et que l'algorithme de sécurité est uniquement validé si au moins un des signaux de sortie (aᵤ, aᵥ, a_{w}, ou respectivement a_{w}, aₓ, a_{y}) dépasse la valeur seuil (SW).

9. Procédé selon les revendications 7 ou 8, **caractérisé en ce que** le signal d'essai (t) est envoyé au circuit de commande (15) du capteur (17, 18, 19, 20) de manière à ce qu'un signal de sortie (aᵤ, aᵥ, a_{wg} ou respectivement a_{wg}, aₓ, a_{y}) soit généré ou respectivement simulé.

10. Procédé selon les revendications 7 ou 8, **caractérisé en ce que** le signal d'essai (t) est envoyé à l'élément sensible (g-cell 11) du capteur (17, 18, 19, 20) de manière à ce que la masse sismique (12) de l'élément sensible (11) soit déplacée dans une direction (u, v, w, x, y) définie au préalable.

11. Procédé selon l'une quelconque des revendications 7 à 10, **caractérisé par** l'utilisation d'un capteur dit de sécurité (19) avec un élément sensible (11) dont l'axe de sensibilité (w) est incliné par rapport à deux axes de sensibilité (x, y) qui sont perpendiculaires l'un à l'autre, notamment incliné de manière à former un angle de 45°, 135° ou 225° par rapport aux axes de sensibilité (x ou respectivement y) qui sont perpendiculaires l'un à l'autre.

12. Procédé selon la revendication 11, **caractérisé par** l'utilisation de deux capteurs (17, 18) qui comportent chacun un élément sensible (11) avec un axe de sensibilité, ces deux axes de sensibilité (x, y) étant perpendiculaires l'un à l'autre.

13. Procédé selon la revendication 11, **caractérisé par** l'utilisation d'un capteur dit x-y qui comporte deux éléments sensibles (11) munis chacun d'un axe de sensibilité, ces deux axes de sensibilité (x, y) étant perpendiculaires l'un à l'autre.

14. Procédé selon la revendication 11, **caractérisé par** l'utilisation d'un capteur dit x-y (20) qui comporte un élément sensible (11) muni de deux axes de sensibilité (x, y) qui sont perpendiculaires l'un à l'autre.

15. Procédé selon les revendications 9 ou 10 et selon l'une quelconque des revendications 11 à 14, **caractérisé en ce que** la masse sismique (12) de deux éléments sensibles (11) peut être déplacée dans une direction définie au préalable ou bien que les signaux correspondants sont générés ou respectivement simulés électroniquement, et plus particulièrement
- que la masse sismique (12) de l'élément sensible (11) d'un premier capteur d'accélération (19) est déplacée par une force pondérée dans une direction opposée à son axe de sensibilité (w) ou bien qu'un signal correspondant (a_{wg}) est généré ou respectivement simulé électroniquement, et
- que la masse sismique (12) de l'élément sensible (11) d'un deuxième capteur d'accélération (17, 18 ; 20) est déplacée par une force non pondérée dans la direction de son axe de sensibilité (x ou y) ou bien qu'un signal correspondant (aₓ ou a_{y}) est généré ou respectivement simulé électroniquement ;
- ou inversement.

16. Procédé selon la revendication 15, **caractérisé par** un facteur de pondération (k_{w}) de la moitié de la racine de deux (½ * √2 ≈ 0,707).

17. Procédé selon les revendications 9 ou 10 et selon l'une quelconque des revendications 11 à 14, **caractérisé en ce que** la masse sismique (12) de trois éléments sensibles (11) peut être déplacée dans une direction définie au préalable ou bien que les signaux correspondants sont générés ou respectivement simulés électroniquement, et plus particulièrement
- que la masse sismique (12) de l'élément sensible (11) d'un premier capteur d'accélération (19) est déplacée par une force pondérée dans une direction opposée à son axe de sensibilité (w) ou bien qu'un signal correspondant (a_{wg}) est généré ou respectivement simulé électroniquement ;
- que la masse sismique (12) de l'élément sensible (11) d'un deuxième capteur d'accélération (17, 18 ; 20) est déplacée par une force non pondérée dans la direction de son axe de sensibilité (x ou y ; u) ou bien qu'un signal correspondant (aₓ ou a_{y} ; aᵤ) est généré ou respectivement simulé électroniquement ; et
- que la masse sismique (12) du deuxième ou bien d'un troisième élément sensible (11) des capteurs d'accélération (11, 12, 13, 14) est déplacée par une force non pondérée dans la direction de son axe de sensibilité (y ou x ; v) ou bien qu'un signal correspondant (a_{y} ou aₓ ; aᵥ) est généré ou respectivement simulé électroniquement ;
- ou inversement.

18. Procédé selon la revendication 17, **caractérisé par** un facteur de pondération (k) correspondant à la racine de deux (√2 ≈ 1,41).

19. Procédé selon l'une quelconque des revendications 7 à 10, **caractérisé par** une disposition en étoile de trois capteurs (17, 18, 19) qui comportent chacun un élément sensible (11) dont les axes de sensibilité respectifs (u, v, w) sont inclinés les uns par rapport aux autres, notamment de manière à ce que l'angle entre les axes de sensibilité (u, v, w) soit de 120°.

20. Procédé selon les revendications 9 ou 10 et selon la revendication 19, **caractérisé en ce que** la masse sismique (12) de trois éléments sensibles (11) est déplacée dans une direction définie au préalable ou bien que les signaux correspondants sont générés ou respectivement simulés électroniquement, plus particulièrement suivant les dispositions décrites dans la revendication 17.

21. Procédé selon la revendication 20, **caractérisé par** un facteur de pondération de 2.

22. Procédé selon l'une quelconque des revendications de procédé précédentes, **caractérisé en ce qu'**en mode d'essai, la somme pondérée (Σ_{g}) des signaux de sortie (aᵤ, aᵥ, a_{wg} ou respectivement a_{wg}, aₓ, a_{y}) doit être approximativement égale à zéro pour diagnostiquer un bon fonctionnement du dispositif de commande (17, 18, 19 ou respectivement 19, 20).

23. Procédé selon l'une quelconque des revendications 10 à 22, **caractérisé par** un déplacement capacitif à des fins d'essai de la masse sismique (12) des capteurs d'accélération (17, 18, 19 ou respectivement 19, 20).
